# EUROPÄISCHE PATENTANMELDUNG

(11) **EP 0 922 725 A1**
(43) Veröffentlichungstag der Anmeldung: **16.06.1999**
(21) Anmeldenummer: 98122764.8
(22) Anmeldetag: 01.12.1998
(51) Int. Cl.: C08J 5/12

(54) **Verfahren zur Herstellung von Blechhalbzeugen**

(30) Priorität: 10.12.1997 DE 19754812
(71) Anmelder: Henkel Kommanditgesellschaft auf Aktien, 40589 Düsseldorf-Holthausen (DE)
(72) Erfinder: Benkhoff, Hermann Dipl.-Ing., 63571 Gelnhausen-Höchst (DE)

(57) **Zusammenfassung**

Vorgeschlagen wird ein Verfahren zur Herstellung von Blechhalbzeugen, bei dem man Bleche über ein Walzenauftragwerk mit einem Haftklebstoff beschichtet, die beschichteten Bleche auf die Verarbeitungstemperatur des Klebers erwärmt und kontinuierlich mit einer Elastomerendlosfolie in einem Kaschierspalt verklebt.

## Beschreibung

### Gebiet der Erfindung

Die Erfindung betrifft ein Verfahren zur kontinuierlichen Herstellung von Blechhalbzeugen, insbesondere von Verbundblechen, bei dem man Bleche mit Hilfe eines Klebstoffes mit einer Elastomerfolie kaschiert.

### Stand der Technik

Zur Abdichtung von ebenen Flächen, speziell Flachdächem, vor dem Eindringen von Feuchtigkeit oder Chemikalien, werden Kunststoffolien eingesetzt, die überlappend verlegt und an den Nahtstellen in geeigneter Weise miteinander verbunden werden. Bei den Kunststoffen handelt es sich häufig um PVC-Folien, die je nach Qualität monomere oder polymere Weichmacher enthalten und üblicherweise entweder heißluftverschweißt oder nach Anquellen mit organischen Lösungsmitteln kalt gefügt werden. Zum Abschluß gegen die Begrenzung, also in der Regel das Mauerwerk, werden Winkelbleche eingesetzt, die zur Folienseite mit Kunststoffen beschichtet sind; vorzugsweise bestehen Folie und Kunststoffbeschichtung aus dem gleichen Material. Der Winkel wird mechanisch in der Begrenzung befestigt und die Folie mit der Folienseite des Verbundbleches verschweißt oder verfugt.

Obschon PVC-Dachbahnen und PVC-Verbundbleche weit verbreitet sind, existieren im Markt auch vergleichbare Produkte auf Basis anderer Kunststoffe, was beispielsweise darauf zurückzuführen ist, daß PVC als Chlorchemikalie in der gesellschaftlichen Diskussion steht und nur unter Freisetzung von HCl verbrennt. Ein weiterer Nachteil der PVC-Folien besteht darin, daß die darin enthaltenen Weichmacher im Laufe der Zeit an die Oberfläche migrieren und ausgewaschen werden, was zum Verspröden oder Bruch der Folien führen kann. Aus den genannten Gründen werden als Alternative zu PVC Elastomere, vorzugsweise Kautschuke und insbesondere Ethylen-Propylen-Kautschuke eingesetzt, die gemäß DIN 7728 auch kurz als EPDM bezeichnet werden. Die Herstellung der EPDM-Folien erfolgt analog zu PVC-Dachbahnen durch Kalandrieren oder Extrusion durch eine Breitschlitzdüse, während man die entsprechenden Blechhalbzeuge bzw. Verbundbleche bislang diskontinuierlich in einem Tafelverfahren herstellt. Hierbei werden beispielsweise Zinkbleche mit Kleber beschichtet, mit der EPDM-Folie und einem Prägetrennpapier belegt und jeweils zwei Lagen in einer Etagenpresse bei 180°C zu einem unlöslichen Verbund verpreßt. Die Trennpapiere trennen dabei nicht nur die beiden Lagen in den beheizten Etagenböden, sondern kaschieren durch eine vorgegebene Prägung auch Herstellungsfehler der EPDM-Folie. Die nach diesem Verfahren hergestellten EPDM-Verbundbleche sind allerdings in der Herstellung deutlich teurer als vergleichbare Produkte auf Basis von PVC, zumal die Verklebung wegen der sehr unpolaren Oberfläche des Polymers ohnehin mit Schwierigkeiten verbunden ist.

Die Aufgabe der Erfindung hat demnach darin bestanden, ein Verfahren zur Herstellung von Blechhalbzeugen auf Basis von Elastomeren zur Verfügung zu stellen, das sich gegenüber dem Stand der Technik durch einen verminderten technischen Aufwand und verbesserte Wirtschaftlichkeit bei vergleichbaren anwendungstechnischen Eigenschaften, insbesondere Verbundhaftung auszeichnen.

### Beschreibung der Erfindung

Gegenstand der Erfindung ist ein Verfahren zur Herstellung von Blechhalbzeugen, welches sich dadurch auszeichnet, daß man Bleche über einen Walzenauftragwerk mit einem Haftklebstoff beschichtet, die beschichteten Bleche auf die Verarbeitungstemperatur des Klebers erwärmt und kontinuierlich mit einer Elastomerendlosfolie in einem Kaschierspalt verklebt.

Überraschenderweise wurde gefunden, daß sich Blechhalbzeuge der gewünschten Art in technisch einfacher Weise und damit bei verminderten Herstellkosten herstellen lassen, wenn man die Bleche unter Verwendung eines Haftklebstoffs kontinuierlich mit Elastomerendlosfolien kaschiert.

### Bleche

Die Auswahl der für das Verfahren geeigneten Bleche ist an sich unkritisch, dementsprechend können Aluminiumbleche, Kupferbleche, Edelstahlbleche oder Stahlbleche eingesetzt werden, von denen letztere verchromt, sedimentverzinkt oder allgemein verzinkt vorliegen können. Die Bleche können im vollkontinuierlichen Verfahren ( 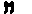 Endlos-Verfahren") als Endlosbleche eingesetzt werden, im teilkontinuierlichen Verfahren ( 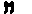 Tafel-Verfahren") werden Stapelbleche verwendet. Die Endlosbleche können eine Länge von 100 bis 1.500 m aufweisen. Die mittlere Dicke der Bleche liegt im Bereich von 0,5 bis 1 mm und vorzugsweise bei etwa 0,6 mm.

### Haftklebstoffe

Im Laufe ihrer umfangreichen Untersuchungen hat die Anmelderin gefunden, daß die Auswahl des Klebstoffs für die erfolgreiche Durchführung des Verfahrens ausgesprochen kritisch ist. So wurde beispielsweise unter Verwendung sonst gängiger Schmelz- oder Plastisolklebstoffe, aber auch chemische Reaktivklebstoffe, nur Blechhalbzeuge erhalten, die sich im Erichsen-Schältest als nicht ausreichend belastbar erwiesen und Produkten, die nach den kontinuierlichen Verfahren des Stands der Technik hergestellt worden waren, nachstanden. Demzufolge besteht ein besonderes Kennzeichen des erfindungsgemäßen Verfahrens in der Verwendung von Haftklebstoffen, worunter man Kunstharze aus der Gruppe der Polyacrylate, Polyurethane, Styrolbutadiene, Polyisoprene und/oder Polychloroprene versteht, die vorzugsweise in Form wäßriger oder wäßrig/organischer Dispersionen eingesetzt werden. Enthalten die Dispersionen organische Lösemittel bzw. Filmbildner, wie beispielsweise Xylol, Diacetonalkohol, Ethylbenzol oder Cyclohexanon, muß dieser Gehalt vorzugsweise so niedrig sein (Brandschutzklasse A2), daß ein Ausdämpfen während der Verarbeitung unterbleibt, da ansonsten besondere Vorkehrungen für den Explosionsschutz getroffen werden müssen, die das Verfahren wieder verteuern würden. Weiterhin besitzen besonders geeignete Einkomponenten-Haftkleber eine Topfzeit von mehr als 8 h und Flammpunkte oberhalb von 21 °C.

### Elastomere

Das erfindungsgemäße Verfahren ist grundsätzlich auf beliebige Typen von Elastomeren anwendbar. Hierunter versteht der Fachmann Polymere mit gummielastischem Verhalten, die bei Raumtemperatur wiederholt mindestens auf das Zweifache ihrer Länge gedehnt werden können und nach Aufhebung des für die Dehnung erforderlichen Zwanges sofort wieder annähernd ihre Ausgangslänge einnehmen. Elastomere sind weitmaschig bis zur Zersetzungstemperatur vernetzte hochpolymere Werkstoffe, die sich bei niederen Temperaturen stahlelastisch verhalten und die auch bei höheren Temperaturen nicht viskos fließen, sondern von 20°C oder einer tieferen Temperatur bis zur Zersetzungstemperatur das für sie typische gummielastische Verhalten zeigen. Elastomere, die im Sinne der Erfindung in Frage kommen, besitzen eine Glasübergangstemperatur unterhalb von 0°C. Sie sind ferner durch einen stofflichen Zustand gekennzeichnet, der unterhalb dieser Temperatur energieelastische und energie/entropieelastische Formänderungen und zwischen 20°C oder einer tieferen Temperatur und der Zersetzungstemperatur gummielastische Formänderungen erlaubt, Fließvorgänge unter dem Einfluß schwacher äußerer Kräfte jedoch verhindert. Die einzusetzenden Elastomere sind - gleichgültig in welcher Weise - weitmaschig bis zur Zersetzungstemperatur so vernetzt, daß die Polymermoleküle unter dem Einfluß schwacher äußerer Kräfte nicht mehr in der Lage sind, bei irgendeiner Temperatur makro-Brown'sche Bewegungen durchzuführen. Typische Beispiele für geeignete Elastomere sind: Acrylatkautschuk (ACM), Polyester-Urethan-Kautschuk (AU), bromierter Butylkautschuk (BIIR), Polybutadien (PB), chlorierter Butylkautschuk (CIIR), chloriertes Polyethylen (CM), Epichlorhydrin-Homopolymer (CO), Polychloropren (CP), sulfuriertes Polyethylen (CSM), Ethylen-Acrylat-Kautschuk (EAM), Epichlorhydrin-Copolymere (ECO), Polyether-Urethan-Kautschuk (EU), Ethylen-Vinylacetat-Copolymer (EVM), Fluorkautschuk (FKM), Fluorsiliconkautschuk (FVMQ), hydrierter Nitrilkautschuk (H-NBR), Butylkautschuk (IIR), Dibutylpolysiloxan, Vinyl-haltig (MVQ), Nitrilkautschuk (NBR) mit geringem, mittleren oder hohem ACN-Gehalt, Naturkautschuk (synthetisches Polyisopren) (NR, IR), Thioplaste (OT), Polyfluorphosphazene (PNF), Polynorbornen (PNR), Styrolbutadienkautschuk (SBR) sowie Carboxy-Gruppenhaltiger NBR (X-NBR) und deren Gemische. In einer bevorzugten Ausführungsform der Erfindung werden jedoch Ethylen-Propylen-Kautschuke, entweder als Terpolymere (EPDM,S) oder Copolymere (EPDM,P) eingesetzt. Damit sich die Verbundblech-Elastomere, speziell aber das EPDM, mit der Elastomerfolie der Dachbahn verbinden kann, empfiehlt es sich partiell vulkanisiertes, d.h. schwefel- oder peroxid-vernetztes Material einzusetzen, welches man zum Verschweißen mit Citrusterpenen aktiviert und auf diese Weise vollständig vernetzt. Der Vorteil der Elastomere gegenüber Thermoplasten wie PVC besteht darin, daß sie keine Weichmacher benötigen. Damit sich dieser Vorteil während der Verarbeitung nicht durch Verbackungen in einen Nachteil verwandelt, empfiehlt es sich, das EPDM nach der Herstellung keinen weiteren Temperatur- oder Druckbelastungen auszusetzen und vorzugsweise hängend zu lagern.

### Kaschierung

In der Herstellung der Blechhalbzeuge wird zwischen dem Tafel- und dem Endlosverfahren unterschieden. Bei dem ersten Verfahren werden die Stapelbleche mit einem Sauger einzeln nacheinander auf ein Förderband gehoben und über Walzenauftragwerken mit dem Haftkleber beschichtet. Im bevorzugten Endlosverfahren läuft das Endlosblech von der Rolle direkt durch die Walzenauftragwerke. Die Schichtdicke des Haftklebers kann dabei in der Größenordnung von 5 bis 15 und vorzugsweise 7 bis 10 µm liegen. Die beschichteten Bleche werden anschließend durch einen oder mehrere Trockenöfen geführt, wo sie auf die Verarbeitungstemperatur des Klebers aufgeheizt werden, die im Bereich von 170 bis 220°C liegt. Danach gelangen die aufgeheizten beschichteten Bleche in die Kaschierstation, wo sie mit der Folie kontinuierlich in einem Kaschierspalt verklebt werden; die Kaschiertemperatur entspricht dabei üblicherweise der Verarbeitungstemperatur des Haftklebers. Die Folienstärke kann 400 bis 1000, vorzugsweise 450 bis 600 µm betragen. Es ist ferner möglich, zusammen mit der Folie ein Prägepapier einlaufen zu lassen. Das gegebenenfalls mit einer Prägung versehene Verbundblech wird im Tafelverfahren zugeschnitten oder im Endlosverfahren als Rolle aufgenommen; in beiden Fällen werden die Ränder nachträglich besäumt. Endlosbleche werden können auch zu Blechtafeln einer Länge von 1.000 x 2.000 oder 1.000 x 3.000 m abgelängt werden. Geeignete Verbundbleche aus dem Tafelverfahren weisen in der Regel Abmessungen von 1.000 x 2.500 bis 1.500 x 3.000 mm auf. Alternativ kann die Kaschierung grundsätzlich auch diskontinuierlich durchgeführt werden, wobei man die Bleche und Kleber manuell mit der Elastomerfolie und Prägetrennpapier belegt und in Etagenpressen verklebt.

### Beispiele

**Herstellbeispiel.** Handelsübliches verzinktes Endlosstahlblech mit einer mittleren Dicke von 0,6 mm (Fa.Krupp Hoesch) wurde in einer Walzenauftragsstation kontinuierlich mit einer 6 µm dicken Schicht Haftkleber (Fa.Köratac 59234, Kömmerling/Pirmasens) beschichtet. Das Zinkblech wurde durch drei Trockenöfen geführt und dabei schrittweise bis auf 216°C erwärmt. Das erwärmte Zinkblech gelangte danach in die Kaschierstation in der es zusammen mit einem Trennpapier (Morocco-Prägung) mit EPDM-Endlosfolie (Tectofin®, Schichtdicke 450 µm, Breite ca. 1050 mm, Fa. Grünau/Hanau) kaschiert wurde. Nach verlassen der Kaschierstation wurde das Verbundblech abgekühlt, die Ränder gesäumt und auf Rollen aufgenommen.

**Anwendungstechnische Prüfung.** Abgelängtes Verbundblech aus dem erfindungemäßen KontiVerfahren wurde bei unterschiedlichen Temperaturen 24 h bewittert und dann im Erichsen-Schältest auf seine Haftung überprüft. Hierzu wird das Verbundblech auf seiner Metallseite mit einer Stahlkugel eingedrückt, so daß auf der Folienseite eine definierte Wölbung entsteht. Der Folienbelag wird an dieser Stelle kreuzförmig eingeritzt und dann untersucht, mit welchem mechanischen Aufwand sich das Folienmaterial vom Untergrund abziehen läßt. Als subjektiver Maßstab gilt die Skala von (+++) = sehr gute Haftung bis (-) unzureichende Haftung. Als Vergleich diente ein entsprechendes Verbundblech nach dem Stand der Technik aus einem diskontinuierlichen Verfahren (Fa.Krempel/Vaihingen). Die Ergebnisse sind in Tabelle 1 zusammengefaßt.

**Tabelle 1**

| Haftung von Verbundblechen | | | | | | |
|---|---|---|---|---|---|---|
| **Verbundblech** | **Haftung nach 24 h Bewitterung bei** | | | | | |
| | **20°C** | **30°C** | **40°C** | **50°C** | **60°C** | **70°C** |
| - Konti-Verfahren (erfindungsgemäß) | +++ | ++ | ++ | ++ | + | + |
| - Diskonti-Verfahren (zum Vergleich) | +++ | +++ | +++ | ++ | ++ | ++ |

Man erkennt, daß die nach dem erfindungsgemäßen Verfahren hergestellten Verbundbleche gegenüber den Produkten des Stands der Technik eine vergleichbar gute Haftung aufweisen.

## Patentansprüche

1. Verfahren zur Herstellung von Blechhalbzeugen, **dadurch gekennzeichnet**, daß man Bleche über ein Walzenauftragwerk mit einem Haftklebstoff beschichtet, die beschichteten Bleche auf die Verarbeitungstemperatur des Klebers erwärmt und kontinuierlich mit einer Elastomerendlosfolie in einem Kaschierspalt verklebt.

2. Verfahren nach Anspruch 1, **dadurch gekennzeichnet**, daß man gegebenenfalls verzinkte oder verchromte Stahlbleche, Edelstahlbleche, Aluminiumbleche und/oder Kupferbleche einsetzt.

3. Verfahren nach den Ansprüchen 1 und 2,**dadurch gekennzeichnet**, daß man Endlos- oder Stapelbleche einsetzt.

4. Verfahren nach den Ansprüchen 1 bis 3, **dadurch gekennzeichnet**, daß man als Haftklebstoffe Kunstharze aus der Gruppe der Polyurethane, Styrolbutadiene, Polyisoprene und Polychloroprene in Form wäßriger oder wäßrig/organischer Dispersionen einsetzt.

5. Verfahren nach den Ansprüchen 1 bis 4, **dadurch gekennzeichnet**, daß man als Elastomere Ethylen-Propylen-Kautschuke (EPDM) einsetzt.

6. Verfahren nach Anspruch 5, **dadurch gekennzeichnet**, daß man Ethylen-Propylen-Terpolymere bzw. Ethylen-Propylen-Copolymere einsetzt.

7. Verfahren nach den Ansprüchen 5 und 6, **dadurch gekennzeichnet**, daß man partiell vulkanisiertes EPDM einsetzt.

8. Verfahren nach den Ansprüchen 5 bis 7, **dadurch gekennzeichnet**, daß man partiell schwefel- oder peroxidvernetztes EPDM einsetzt.
